# EUROPÄISCHE PATENTANMELDUNG

(11) **EP 3 984 980 A1**
(43) Veröffentlichungstag der Anmeldung: **20.04.2022**
(21) Anmeldenummer: 21208416.4
(22) Anmeldetag: 06.08.2014
(51) Int. Cl.: C04B 35/563, C04B 35/565, C04B 35/626, B32B 18/00, C04B 35/14, C04B 35/18, C04B 35/486

(54) **VERFAHREN ZUM HERSTELLEN VON FORMKÖRPERN AUS REAKTIONSGEBUNDENEM, MIT SILICIUM INFILTRIERTEM SILICIUMCARBID**

(30) Priorität: 16.10.2013 DE 102013017193
(62) Teilanmeldung aus: 14750312.2
(71) Anmelder: Schunk Ingenieurkeramik GmbH, 47877 Willich-Münchheide (DE)
(72) Erfinder: LYNEN, Dr.-Ing. Arthur, 47877 Willich (DE); LARSEN, Jens, 41749 Viersen (DE); CLEMENS, Michael, 50181 Bedburg (DE)
(74) Vertreter: Sparing Röhl Henseler

(57) **Zusammenfassung**

Formkörper aus einem Silicium- und/oder Borcarbid mit durch infiltriertes Silicium gefüllten Poren, erhältlich durch einen schichtweise aus einer formlosen Körnung unter Einsatz eines physikalischen oder chemischen Härtungs- oder Schmelzprozesses monolithisch aufgebauten Formkörpers, wobei der Vorkörper eine Körnung mit einem Mengenanteil von mindestens 95 % an Siliciumcarbid und/oder Borcarbid mit einer mittleren Korngröße (d 50) von 115 bis 200 µm aufweist, und der so gebildete poröse Vorkörper mindestens einmal getränkt ist mit einer Rußsuspension oder über eine Gasphasenabscheidung Kohlenstoff eingebracht ist und in Kontakt mit flüssigem oder gasförmigem Silicium bei einem anschließenden Reaktionsbrand sekundäres Siliciumcarbid gebildet ist, das einen entstandenen Durchdringungsverbund verfestigt.

## Beschreibung

Die Erfindung betrifft einen Formkörper aus reaktionsgebundenem, mit Silicium infiltriertem Siliciumcarbid und/oder Borcarbid nach dem Oberbegriff des Anspruchs 1.

Aus DE 42 43 864 C2 ist ein Verfahren zum Herstellen von Formkörpern aus reaktionsgebundenem, mit Silicium infiltriertem Siliciumcarbid bekannt, bei dem ein entsprechender Schlicker hergestellt und zur Bildung eines Grünkörpers in eine Form gegossen wird. Der Grünkörper wird dann getrocknet und nach dem Trocknen in Kontakt mit flüssigem oder gasförmigem Silicium erhitzt. Dieses Gießverfahren ist jedoch aufwendig oder nicht anwendbar, wenn große Formkörper, Formkörper mit Hinterschneidungen oder Formkörper mit sehr unterschiedlichen Wandstärkebereichen hergestellt werden sollen. Derartige Formkörper werden daher aufwändig aus Teilen zusammengefügt. Abgesehen vom Aufwand verursachen die Fügestellen immer wieder Probleme bei der Verarbeitung und der Haltbarkeit.

Aus DE 10 2005 003 197 B4 ist ein Verfahren zum Herstellen von Formkörpern aus reaktionsgebundenem, mit Silicium infiltriertem Siliciumcarbid bekannt, bei dem ebenfalls ein Schlicker verwendet wird. Der Schlicker wird hergestellt aus feinkörnigem Siliciumcarbid, kolloidalem Kohlenstoff, Hilfsstoffen und einem flüssigen Medium. Der Schlicker wird zusammen mit einem textilen Stoff aus einem Fasermaterial, das einen Kohlenstoffrückstand von höchstens 50 % nach Pyrolyse aufweist, lagenweise geformt. Hierbei verhindert der textile Stoff ein Abbröseln des trocknenden und dabei schrumpfenden Schlickers. Ferner kann durch späteres Erhitzen ein einheitlicher reaktionsgebundener, mit Silicium infiltrierter Siliciumcarbidkörper hergestellt werden.

Ferner ist aus EP 1 284 251 B1 bekannt, ein poröses und dementsprechend leichtgewichtiges sowie strukturiertes Keramikmaterial auf der Basis von Siliciumcarbid herzustellen, bei dem ein Gerüst mit einer porösen Struktur wie Wellpappe oder Gewebe mit einem Schlicker aus einem Harz als Kohlenstoffquelle und pulverförmigem Silicium getränkt, zum Reagieren mit dem Silicium carbonisiert sowie anschließend flüssiges Silicium infiltriert wird, um die bei der Reaktion des Siliciums mit dem Kohlenstoff gebildeten Poren zu schließen, aber die Struktur des Gerüsts, d.h. etwa die Struktur der Wellpappe oder des Gewebes, zu erhalten. Derartige faserverstärkten Siliciumcarbid-Verbundwerkstoffe sind für Anwendungen geeignet, die eine verbesserte Zähigkeit erfordern. Die erhaltenen Siliciumcarbid-Verbundwerkstoffe sind jedoch nur einfach dichte faserverstärkte Formkörper.

Schließlich ist bekannt, dass das Urformen größerer und komplexerer keramischer Bauteile im Wesentlichen auf Gießverfahren beschränkt ist, und zwar mittels Schlickern im Schlickerguss oder mit keramisch, hydraulisch oder chemisch gebundenen Vergussmassen im Rüttel- oder Vibrationsguss. Die Gemeinsamkeit bei diesen Gießverfahren besteht darin, dass die keramischen Pulver und Körnungen im Hinblick auf eine möglichst hohe Packungsdichte in breiten oder mehrmodalen Verteilungen und als Dispersionen meist wässrig vorliegen. Der Übergang vom mehr oder weniger flüssigen in den geformten Zustand erfolgt über Kapillarkräfte, manchmal unterstützt durch hydraulische oder chemische Bindung. Erst durch Entzug des Dispersionsmediums, also meist einer Entwässerung durch Trocknung, kommt es dann zu einer weiteren Verfestigung, durch die handhabbare Rohlinge entstehen. Der Verlust des Dispergiermediums ist meistens mit Schrumpfung des Rohlings verbunden, die abhängig von Bauteilgröße, Komplexität und Material- bzw. Wandstärke zu Rissen führen kann

Aufgabe der Erfindung ist es daher, einen verbesserten aus reaktionsgebundenem, mit Silicium infiltriertem Siliciumcarbid und/oder Borcarbid hergestellten Formkörper zu schaffen, der zudem eine Geometriefreiheit bei der Herstellung der Formkörper erlaubt.

Diese Aufgabe wird durch die Merkmale des Anspruchs 1 gelöst.

Hierdurch wird ein aus reaktionsgebundenem, mit Silicium infiltriertem Siliciumcarbid und/oder Borcarbid hergestellter Formkörper geschaffen, der eine Geometriefreiheit erlaubt. Durch Urformen, bei dem ein Vorkörper schichtweise aus einer formlosen Körnung unter Nutzung physikalischer und/oder chemischer Bindemittel aufgebaut wird, können ausgehend von Konstruktionsdaten Formkörper mit großer und/oder komplexer Form hergestellt werden. Dies bedeutet, dass Hinterschneidungen möglich sind, die mit keramischen Formgebungsverfahren nicht oder nur durch Zusammenfügen verschiedener Formkörper herstellbar sind. Schließlich ist es möglich, die Vorkörper in kürzester Zeit entstehen zu lassen.

Vorhandene CAD-Daten können ohne Formen direkt und schnell in Bauteile, Werkstücke oder sonstige Formkörper umgesetzt werden.

Der erfindungsgemäße Formkörper ist dabei mindestens zweistufig aufgebaut, indem zunächst der Vorkörper schichtweise aufgebaut wird. Die dazu verwendete Körnung eines primären Werkstoffs, hier Siliciumcarbid und/oder Borcarbid, ermöglicht eine möglichst hohe Packungsdichte mit einer Porosität, die das Einbringen von kolloidalem Kohlenstoff bzw. Ruß oder das Abscheiden von Kohlenstoff in der Weise erlaubt, dass ein von der Porosität gebildeter Porenraum mit sekundärem Siliciumcarbid und gegebenenfalls Silicium bei einem Reaktionsbrand gefüllt und der Vorkörper zu einem Formkörper verfestigt wird.

In dem erfindungsgemäßen Formkörper bleibt ferner im Gegensatz zu den Schlickergussverfahren die Dimensionen unverändert, wenn bei der Formgebung aus einer Korn-Schüttung ein verfestigter, handhabbarer poröser Vorkörper entsteht und anschließend seine Porosität durch Tränkung oder Gasphasenabscheidung gefüllt wird, auch wenn im Fall der Tränkung das Dispergiermedium entzogen wird. Dadurch können Risse insbesondere beim Entnehmen des Rohlings aus großen, komplexen Formen vermieden werden.

Erfindungsgemäß wird also ein verfestigter Formkörper hergestellt, dessen gebildetes sekundäres Siliciumcarbid durch die Positionierung in dem Porenraum des Vorkörpers, wo Kohlenstoff in einer wählbaren Menge einbringbar ist, eine stabilisierende Wirkung bereits beim Brand als auch in Verbindung mit dem primären Werkstoff liefert. Das (neugebildete) sekundäre Siliciumcarbid bestimmt somit die Gefügestruktur des Formkörpers, was sich anhand elektronenmikroskopischer Untersuchungen nachweisen lässt.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch und teilweise geschnitten eine Seitenansicht eines Keramikhohlkörpers,
Fig. 2 zeigt schematisch eine Seitenansicht eines Keramikkörpers mit Hinterschneidungen,
Fig. 3 zeigt schematisch einen Verfahrensverlauf einer Herstellung eines Teilstücks eines Formköpers aus SiSiC durch Mehrfachtränkung eines porösen SiC Vorkörpers mit einer Rußsuspension und anschließender Silicium-Infiltration.

Die Erfindung betrifft einen aus reaktionsgebundenem, mit Silicium infiltriertem Siliciumcarbid und/oder Borcarbid hergestellten Formkörper.

Ein Vorkörper wird schichtweise aus einer formlosen Körnung unter Einsatz eines physikalischen oder chemischen Härtungs- oder Schmelzprozesses monolithisch aufgebaut. Die Körnung weist dabei einen Mengenanteil von mindestens 95 % an Siliciumcarbid und/oder Borcarbid mit einer mittleren Korngröße von 70 bis 200 µm, erfindungsgemäß 115 bis 200 µm, auf. Der so gebildete Vorkörper wird mindestens einmal getränkt mit einer Rußsuspension oder es wird über eine Gasphasenabscheidung Kohlenstoff eingebracht.

In Kontakt mit flüssigem oder gasförmigem Silicium erfolgt anschließend ein Reaktionsbrand, bei dem sich sekundäres Siliciumcarbid bildet, das einen entstandenen Durchdringungsverbund verfestigt.

Die Abformung hintergriffiger Geometrien wird dadurch monolithisch überhaupt erst möglich.

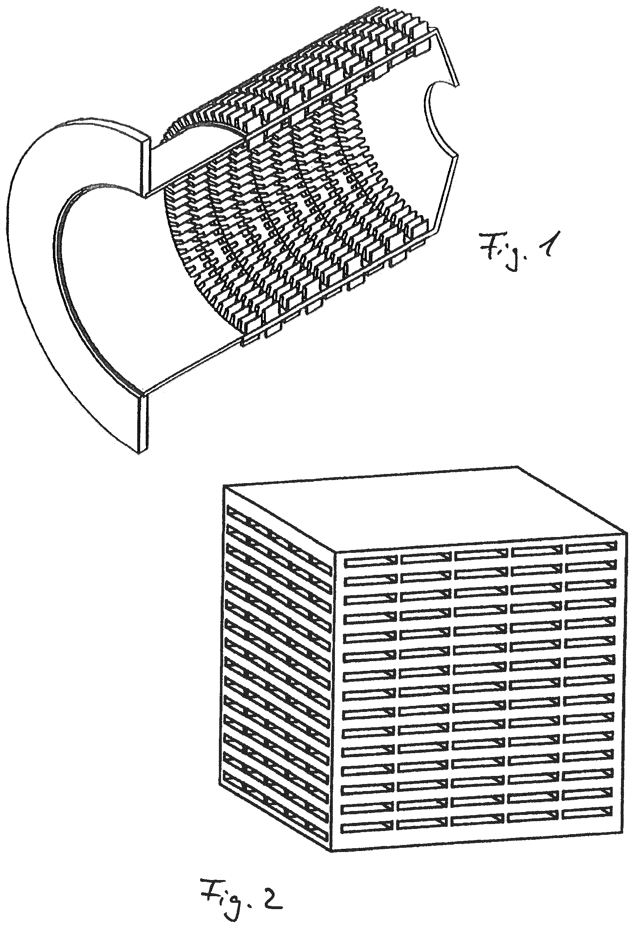

Fig. 1 und Fig. 2 zeigen einen Keramikhohlkörper und einen Keramikkörper mit Hinterschneidungen, die beispielsweise als Wärmetauscherstrukturen Verwendung finden. Derartige Bauteile können mit dem beschriebenen Verfahren aus einem Stück ohne weitere Fertigungsschritte wie Fügen oder Abtragen durch Fräsen oder Bohren hergestellt werden. Entsprechend sind im fertigen Bauteil keine Fügestellen vorhanden.

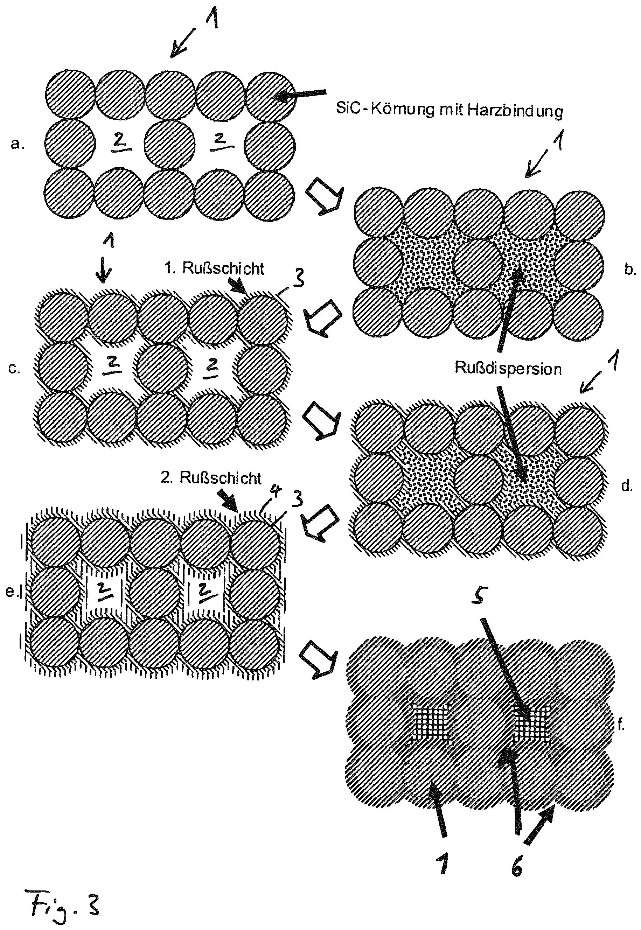

Der erfindungsgemäße Formkörper wird mindestens zweistufig aufgebaut und umfasst die Herstellung eines Vorkörpers. Aufgrund der verwendeten Korn-Schüttung wird ein poröser Vorkörper hergestellt. Fig. 3 zeigt als Bild a. ein Teilstück eines solchen Vorkörpers. Durch eine Verwendung von Körnungen mit einer mittleren Korngröße (d 50) von 115 bis 200 µm und geeignetem Bindemittel wird eine Porosität erzielt, die eine vollständige Tränkung mit Dispersionen auf Basis von Nanopulvern zulässt. Alternativ ist die Einbringung von Kohlenstoff durch Abscheidung aus der Gasphase mittels CVD (Chemical Vapor Deposition) möglich. Soll mehrfach getränkt oder aus der Gasphase abgeschieden werden, sollte nach den jeweils vorhergehenden Behandlungen ausreichend frei durchströmbarer Porenraum 2 verbleiben, wie die Bilder b. bis d. der Fig. 3 zeigen.

Da sich der erfindungsgemäße Formkörper insbesondere für die Herstellung von Bauteilen aus Silicium infiltriertem Siliciumcarbid eignet, bezieht sich das Ausführungsbeispiel auf diesen Werkstoff.

Aus einer von der technischen Feuerfestkeramik beispielsweise bekannten Siliciumcarbid-Körnung 100/F, deren Korngrößenverteilung sich mit den Werten:

| | |
|---|---|
| d 10: | 75 µm |
| d 50: | 115 µm |
| d 90: | 160 µm |

beschreiben lässt, und einem Bindemittel, vorzugsweise Furanharz, wird ein Vorkörper schichtweise aufgebaut. Der so gebildete Vorkörper besitzt eine Porosität, die im Wesentlichen nur aus offenen Poren, dem Porenraum 2, besteht, wie Bild a. der Fig. 3 zeigt. Die Porosität liegt bei 47 Vol.% mit einem Medianwert der Porengrößenverteilung von 43 µm. Das Bild a. von Fig. 3 wird deshalb beschrieben als SiC-Körnung mit Harzbindung.

Dieser Vorkörper wird anschließend mit einer wässrigen Rußsuspension getränkt, wie Bild b. von Fig. 3 zeigt. Die Rußsuspension enthält 30 Gew.-% (in Hundert) Ruß und enthält ferner neben dem Dispergiermittel auf Polyelektrolytbasis ein Netzmittel. Das Netzmittel führt dazu, dass die Rußsuspension 7 bei einem Trocknen auf die Körner des porösen Vorkörpers aus SiC bzw. dessen Struktur als eine erste Rußschicht 3 aufzieht, wie Bild c. der Fig. 3 zeigt, und nicht im Porenraum 2 koaguliert. Dadurch ist sichergestellt, dass auch bei einem mehrmaligen Tränken, wie Bild d. in Verbindung mit Bild b. der Fig. 3 zeigt, ausreichend durchströmbarer Porenraum 2 zur Verfügung bleibt. Dies zeigt Bild e. der Fig. 3 anhand einer zweiten Rußschicht 4, die auf der ersten Rußschicht 3 aufgezogen ist und einen restlichen Porenraum 2 als durchströmbar frei lässt. Dies ist eine Voraussetzung für den nachfolgenden Reaktionsbrand mit infiltriertem Silicium 5, das gemäß Bild f. der Fig. 3 in den restlichen Porenraum 2 eindringt zur Bildung von sekundärem SiC 6 gegenüber dem primären Sic der Körnung 1.

Nach einem beispielsweise einmaligen Tränken des Vorkörpers kann das Verhältnis Siliciumcarbid/Kohlenstoff 87/13, nach zweimaligem Tränken 79/21 und nach dreimaligen Tränken 76/24 betragen.

Der hier mehrfach (nämlich zweimal) mit einer Rußsuspension getränkte Vorkörper wird durch den Reaktionsbrand in Silicium infiltriertes Siliciumcarbid (SiSiC) überführt unter Bildung von senkundärem SiC 6, das den in Bild f. der Fig. 3 dargestellten Durchdringungsverbund verfestigt. Dazu dringt bei Temperaturen oberhalb von 1400°C flüssiges Silicium in die verbliebene (restliche) offene Porosität bzw. deren Porenraum 2 ein.

Der Kohlenstoff ist notwendig, um eine ausreichende Benetzung des primären SiC mit flüssigem Silicium sicherzustellen. Außerdem bildet der Kohlenstoff bei dem Reaktionsbrand zusammen mit dem Silicium sekundäres Siliciumcarbid 6, das zur Verfestigung des Druchdringungsverbundes führt, die bereits beim Brand selber erwünscht, da stabilisierend ist.

Der Volumenanteil und die Kornverteilung des primären Siliciumcarbids im silicierten Formkörper entsprechen vorzugsweise im Wesentlichen denen der Siliciumcarbid-körnung im Vorkörper. Der ursprünglich im Vorkörper vor der Tränkung mit Rußsuspension vorhandene Porenraum 2 entspricht im silicierten Zustand vorzugsweise dem Volumen von sekundärem Siliciumcarbid 6 und Silicium 5. Das Verhältnis von sekundärem Siliciumcarbid 6 und Silicium 5, wie in Bild f. der Fig. 3 dargestellt, hängt hierbei von dem Rußgehalt im Vorkörper ab. Bei geringem Rußgehalt liegt neben dem Primärkorn der Körnung 1 fast ausschließlich Silicium 5 vor (nicht dargestellt). Mit steigendem Rußgehalt erhöht sich der Anteil des sekundären Siliciumcarbids 6, wie Bild f. der Fig. 3 zeigt. Dieses neugebildete sekundäre Siliciumcarbid 6 und das primäre Siliciumcarbid der Körnung 1 lassen sich beispielsweise rasterelektronenmikroskopisch unterscheiden, wie beispielsweise in dem Aufsatz von J.N. Ness, T.F. Page, Microstructural evolution in reaction-bonded silicon carbide, Journal of Materials Science 21 (1986), 1377 - 1397, beschrieben.

Die gängigen Silicierungsmethoden sind Auflage-, Docht- und Tauchtränkung. Die Entfernung zwischen Siliciumquelle und umzusetzendem Vorkörpermaterial sollte dabei im Hinblick auf eine vollständige Infiltration nicht größer als 150 - 200 mm sein. Bei der Auflagetränkung werden häufig siliciumgefüllte SiSiC Schalen oder Silicium-Briketts, so genannte Speiser, verwendet, die einer waagerechten Auflagefläche auf dem Vorkörper bedürfen. Für die Tauchtränkung in einer Siliciumschmelze werden Graphittiegel benötigt, die groß genug sind, den kompletten Vorkörper aufzunehmen. Die typischerweise mit dem hier beschriebenen Verfahren hergestellten komplexen und/oder voluminösen Vorkörper können sich gegebenenfalls nur silicieren lassen, wenn auch die Siliciumquelle als komplexes, angepasstes Formteil gefertigt ist. Auch hierfür eignet sich das erfindungsgemäße Verfahren, bei dem wiederum Siliciumgranulat mit Korngrößen von 70 bis 200 µm, erfindungsgemäß 115 bis 200 µm, verwendet wird.

Als alternative Möglichkeit zur Einbringung von Kohlenstoff kommt dessen Abscheidung aus der Gasphase in Frage.

Unabhängig von dem vorstehend beschriebenen Ausführungsbeispiel gilt erfindungsgemäß allgemein Folgendes:
Zur Härtung des schichtweise aufgebauten Vorkörpers kann ein Bindemittel in Form eines wählbaren Harzes verwendet werden.

Der Vorkörper kann ausgehend von Konstruktionsdaten mittels eines 3D-Druckers aufgebaut werden, der nach dem Laserdruck- oder Multi-Jet-Modeling-Verfahren arbeiten kann. Als Konstruktionsdaten können vorgegebene Maße und Formen eines CAD-Körpers dienen. Das schichtweise Aufbauen des Vorkörpers kann beispielsweise in Schichtstärken von 100 bis 500 µm erfolgen. Der Vorkörper weist vor der Tränkung oder der Gasphasenabscheidung eine Porosität von mindestens 40 Vol.% mit einem Medianwert der Porengrößenverteilung von mindestens 40 µm auf. Als Rußsuspension wird eine wässrige Rußsuspension mit einem wählbaren Netzmittel verwendet, damit die Suspension beim Trocknen auf die Körner im Inneren des Vorkörpers aufzieht. Erfolgt die Tränkung unter Verwendung einer Suspension, wird der Vorkörper vorzugsweise durch Trocknung entwässert, bevor der Reaktionsbrand durchgeführt wird.

Der Vorkörper kann mehrfach mit der Rußsuspension getränkt werden, insbesondere zwei- bis viermal.

Durch das Verfahren wird ein erfindungsgemäßer Formkörper aus einem Siliciumund/oder Borcarbid mit durch infiltriertes Silicium gefüllten Poren hergestellt.

Ein vor der Tränkung oder der Gasphasenabscheidung im Vorkörper vorhandener Porenraum entspricht vorzugsweise im silicierten Zustand einem Volumen von sekundärem Siliciumcarbid und Silicium. Das Verhältnis von sekundärem Siliciumcarbid und Silicium kann über einen Rußgehalt im Vorkörper erfindungsgemäß eingestellt sein.

Nach dem Verfahren lassen sich neben Siliciumcarbid und/oder Borcarbid auch Keramiken auf Basis Aluminiumoxid/silicat, Zirkonoxid, Quarzgut usw. bzw. Oxidkeramik fertigen. Dafür wird ein entsprechender Vorkörper aus geeigneten Rohstoffen, deren Korngrößen vergleichbar sind, schichtweise hergestellt, beispielsweise mittels 3D-Druck. Für die Oxide werden dann eher anorganische Binder anstelle eines Harzes verwendet, die Nachtränkung erfolgt mit pyrogenerzeugten, wässrig dispergierten oxidischen Nanopulvern. Dies ist beispielsweise pyrogene Kieselsäure (z.B. Aerosil) oder pyrogenes Aluminiumoxid (z.B. Aeroxide).

Hierbei handelt es sich dann um ein Verfahren zum Herstellen von Formkörpern aus einer Oxidkeramik, wobei ein Vorkörper schichtweise aus einer formlosen Körnung unter Einsatz eines physikalischen oder chemischen Härtungs- oder Schmelzprozesses monolithisch aufgebaut wird. Die Körnung weist dabei eine mittlere Korngröße von 70 bis 200 µm auf und der so gebildete Vorkörper wird mindestens einmal getränkt mit pyrogenerzeugten, wässrig dispergierten oxidischen Nanopulvern zum Verfestigen des so gebildeten Durchdringungsverbundes.

## Patentansprüche

1. Formkörper aus einem Silicium- und/oder Borcarbid mit durch infiltriertes Silicium gefüllten Poren, erhältlich durch einen schichtweise aus einer formlosen Körnung unter Einsatz eines physikalischen oder chemischen Härtungs- oder Schmelzprozesses monolithisch aufgebauten Formkörpers, **dadurch gekennzeichnet, dass** der Vorkörper eine Körnung mit einem Mengenanteil von mindestens 95 % an Siliciumcarbid und/oder Borcarbid mit einer mittleren Korngröße (d 50) von 115 bis 200 µm aufweist, und der so gebildete poröse Vorkörper mindestens einmal getränkt ist mit einer Rußsuspension oder über eine Gasphasenabscheidung Kohlenstoff eingebracht ist und in Kontakt mit flüssigem oder gasförmigem Silicium bei einem anschließenden Reaktionsbrand sekundäres Siliciumcarbid gebildet ist, das einen entstandenen Durchdringungsverbund verfestigt.

2. Formkörper nach Anspruch 1, **dadurch gekennzeichnet, dass** der Vorkörper ausgehend von Konstruktionsdaten mittels eines 3D-Druckers aufgebaut ist, der nach dem Laserdruck- oder Multi-Jet-Modeling-Verfahren arbeitet.

3. Formkörper nach Anspruch 2, **dadurch gekennzeichnet, dass** als Konstruktionsdaten vorgegebene Maße und Formen eines CAD-Körpers sind.

4. Formkörper nach einem der Ansprüche 1 bis 3, **dadurch gekennzeichnet, dass** das schichtweise Aufbauen des Vorkörpers in Schichtstärken von 100 bis 500 µm erfolgt.

5. Formkörper nach Anspruch 1 bis 4, **dadurch gekennzeichnet, dass** ein vor der Tränkung oder der Gasphasenabscheidung im Vorkörper vorhandener Porenraum im silicierten Zustand einem Volumen von sekundärem Siliciumcarbid und Silicium entspricht.

6. Formkörper nach Anspruch 5, **dadurch gekennzeichnet, dass** das Verhältnis von sekundärem Siliciumcarbid und Silicium über einen Rußgehalt im Vorkörper eingestellt ist.
